# NEUE EUROPÄISCHE PATENTSCHRIFT

(11) **EP 2 680 421 B2**
(45) Veröffentlichungstag und Bekanntmachung des Hinweises auf die Entscheidung über den Einspruch: **08.08.2018**
(45) Hinweis auf die Patenterteilung: 01.04.2015
(21) Anmeldenummer: 12174382.7
(22) Anmeldetag: 29.06.2012
(51) Int. Cl.: H02M 5/458

(54) **Frequenzumrichter mit Zwischenkreiskondensator und Verfahren zum Vorladen desselben**
Frequency inverter with intermediate circuits and method for preloading same
Convertisseur de fréquence doté d'un condensateur de circuit intermédiaire et procédé de pré-charge de celui-ci

(43) Veröffentlichungstag der Anmeldung: 01.01.2014
(73) Patentinhaber: Siemens Aktiengesellschaft, 80333 München (DE)
(72) Erfinder: Dillig, Reinhold, 96117 Memmelsdorf (DE); Schierling, Hubert, 91052 Erlangen (DE); Schwinn, Thomas, 91074 Herzogenaurach (DE)

(56) Entgegenhaltungen:
- EP-A1- 1 808 953
- DE-A1- 10 248 971
- DE-A1- 19 825 801
- DE-A1-102007 007 921
- DE-A1-102009 032 259
- US-A1- 2007 052 403
- US-A1- 2008 068 870
- US-A1- 2009 243 558
- US-A1- 2011 007 530
- US-A1- 2011 007 530
- XP 040426041

## Beschreibung

Die Erfindung betrifft einen Frequenzumrichter zum Betreiben einer elektrischen Maschine an einem elektrischen Netz. Der Frequenzumrichter weist eine Einspeiseeinheit, einen Umrichter sowie einen die Einspeiseeinheit mit dem Umrichter verbindenden Gleichspannungs-Zwischenkreis auf. In dem Gleichspannungs-Zwischenkreis, oder kurz Zwischenkreis, ist zumindest ein Zwischenkreiskondensator bereitgestellt. Die Erfindung betrifft auch ein Verfahren zum Aufladen des Zwischenkreiskondensators, was als Vorladen bezeichnet wird. Ein Frequenzumrichter der genannten Art ist aus der DE 197 39 553 A1 bekannt.

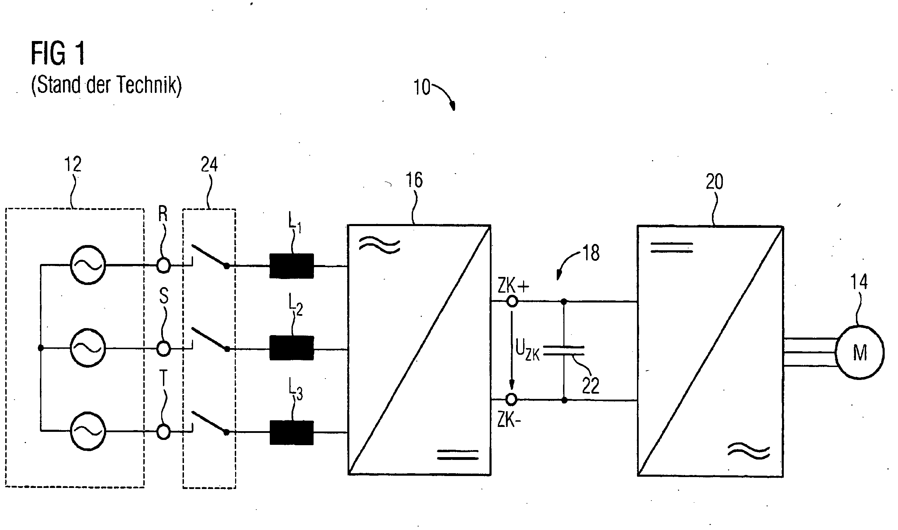

Die prinzipielle Funktionsweise eines Frequenzumrichters ist anhand der schematischen Darstellung in FIG 1 im Folgenden näher erläutert. Mittels eines Frequenzumrichters 10 kann elektrische Energie zwischen einem Wechselspannungs-Versorgungsnetz, im Folgenden kurz als Netz 12 bezeichnet, und einer elektrischen Maschine 14 ausgetauscht werden. Die elektrische Maschine 14 kann als Elektromotor oder als Generator betrieben werden. Entsprechend erfolgt der Austausch der elektrischen Energie entweder vom Netz 12 zur Maschine 14 oder umgekehrt.

Mittels des Frequenzumrichters 10 ist es möglich, eine Umwandlung zwischen einer Netz-Wechselspannung mit vorgegebener Netzfrequenz (z.B. 230V, 50 Hz) einerseits und einer für den Betrieb der elektrischen Maschine 14 nötigen Wechselspannung mit wählbarer Frequenz andererseits durchzuführen. Eine netzseitige Einspeiseeinheit 16 des Frequenzumrichters 10 wandelt dazu zwischen der Netz-Wechselspannung und einer Gleichspannung U_{ZK} um, die zwischen zwei elektrischen Schaltungszweigen ZK+ und ZK- eines Zwischenkreises 18 anliegt. Die Schaltungszweige ZK+ und ZK- verbinden die Einspeiseeinheit 16 mit einem Umrichter 20. Sie umfassen in der Regel Stromschienen. Der Umrichter 20 wandelt zwischen der Gleichspannung U_{ZK} und einer Wechselspannung für die elektrische Maschine 14 um.

Das Netz 12 kann, wie hier dargestellt, ein Drehstromnetz mit drei Netzphasen R, S, T sein. Es kann sich bei dem Netz 12 aber z.B. auch um ein zweiphasiges Netz handeln. Auch die elektrische Maschine 14 kann eine Maschine mit einer beliebigen Anzahl von Phasen sein. Hier dargestellt ist eine dreiphasige Drehstrommaschine.

In dem Zwischenkreis 18 sorgt ein Zwischenkreiskondensator 22 durch eine ausreichend große Kapazität dafür, dass eine bei einem der beschriebenen Wandlungsschritte erzeugte Welligkeit der Gleichspannung U_{ZK} so weit geglättet ist, dass sie den anderen Wandlungsschritt nicht beeinflusst. Der Zwischenkreiskondensator ist dazu zwischen die zwei Schaltungszweige ZK+, ZK- geschaltet. Bevorzugt ist die Zwischenkreiskondensator-Kapazität auch groß genug, um bei einem kurzzeitigen Ausfall der Netz-Wechselspannung für einige Millisekunden einen unterbrechungsfreien Betrieb der elektrischen Maschine 14 zu ermöglichen.

Der Einspeiseeinheit 16 können netzseitig Drosseln L₁, L₂, L₃ vorgeschaltet sein. Diese verhindern, dass von der Einspeiseeinheit 16 bei der Spannungswandlung erzeugte Störsignale als Oberwellen in das Netz 12 übertragen werden. Die Drosseln L₁, L₂, L₃ können eine weitere Funktion haben, wenn die Einspeiseeinheit 16 als Hochsetzsteller betrieben wird, der eine Gleichspannung U_{ZK} mit einem Effektivwert erzeugt, der unabhängig von einem Effektivwert der Netzspannung ist. Die Drosseln L₁, L₂, L₃ sind dann als Kommutierungsinduktivitäten ausgelegt, die verhindern, dass in einem getakteten Betrieb der Einspeiseeinheit 16 erzeugte Kurzschlüsse zwischen den einzelnen Netzphasen R, S, T in der Einspeiseeinheit 16 zu einem Kommutierungsstrom mit einer kritischen Stromstärke führen.

Um die elektrische Maschine 14 z.B. als Motor zu betreiben, wird durch Schließen eines Hauptschützes 24 die Einspeiseeinheit 16 mit den Netzphasen R, S, T des Netzes 12 elektrisch verbunden. Die Einspeiseeinheit 16 erzeugt daraufhin, beispielsweise durch eine Vollweg-Gleichrichtung, die Gleichspannung U_{ZK}, wodurch der Zwischenkreiskondensator 22 aufgeladen wird. Dieser Ladevorgang wird im Folgenden als Vorladephase bezeichnet.

Nachdem der Zwischenkreiskondensator 22 so weit aufgeladen ist, dass die Gleichspannung U_{ZK} einen gewünschten Spannungswert erreicht hat, kann die elektrische Maschine 14 betrieben werden. Dazu erzeugt der Umrichter 20 aus der Gleichspannung U_{ZK} eine hier dreiphasige Wechselspannung, so dass in der elektrischen Maschine 14 ein Drehstrom fließt. Dieser Vorgang ist im Folgenden als Betriebsphase bezeichnet. Eine Frequenz des Drehstroms kann bei dem Umrichter 20 einstellbar sein.

Vor dem Schließen des Hauptschützes ist der Zwischenkreiskondensator in der Regel ungeladen. In der Vorladephase ergibt sich hierdurch das Problem, dass nach dem Schließen des Hauptschützes die Stromstärke des vom Netz in den ungeladenen Zwischenkreiskondensator fließenden Ladestroms aufgrund von dessen großer Kapazität so groß werden kann, dass Komponenten der Einspeiseeinheit beschädigt werden.

Im Zusammenhang mit sporadischen Spannungssprüngen am zwischenkreisseitigen Anschluss der Einspeiseeinheit lehrt die DE 203 11 104 U1, die Einspeiseeinheit über eine Gleichtaktdrossel mit dem Zwischenkreis zu koppeln, um das Auftreten von Überspannungen in dem Zwischenkreis oder in einer am Umrichter angeschlossenen elektrischen Maschine zu verhindern.

In der DE 10 2009 032 259 A1 ist ein Schaltnetzteil mit Pufferkondensator und Einschaltstrombegrenzung beschrieben. Die Einschaltstrombegrenzung umfasst eine Drossel und eine Freilaufdiode sowie Schalter, mittels welchen die vorgenannten Bauteile als Abwärtswandler betrieben werden können. Die Schalter gegebenenfalls die Drossel sind stets derart in dem Schaltnetzteil angeordnet, dass sie nie den gesamten Eingangsstrom im Normalbetrieb führen müssen.

In der DE 198 25 801 A1 ist eine Schaltungsanordnung zur Bildung eines Gleichspannungszwischenkreises für einen Wechselrichter beschrieben. In dem Zwischenkreis sind durch eine einzige Schaltung zwei Funktionen realisiert, nämlich zum einen eine Vorladeschaltung und zum anderen eine Schaltung zur Pufferung und zum Abbau von Bremsenergie. Diese Schaltung weist in einem Leitungszweig, welcher einen Strom vom eingangsseitigen Gleichrichter zum ausgangsseitigen Wechselrichter führt, einen Thyristor auf, der durch Ansteuerpulse gestartet wird.

In der US 2011/007530 A1 ist ein Frequenzumrichter mit einer Vorladeschaltung und einem Zwischenkreiskondensator beschrieben. Die Vorladeschaltung umfasst als Schaltelemente Thyristoren.

In der EP 1 808 953 A1 ist ein Frequenzumrichter beschrieben, welcher parallel zu einem Zwischenkreiskondensator eine Glättungsschaltung für eine verbesserte Glättung der gleichgerichteten Spannung im Zwischenkreis aufweist. Hierzu wird bei schnell ansteigender Zwischenkreisspannung ein Teil des hierdurch einfließenden Stroms in diese Schaltung geleitet und dort in einem Kondensator gespeichert. Dem Kondensator ist ein Entladewiderstand parallel geschaltet, sodass sich der Kondensator kontinuierlich entlädt und so immer wieder einen weiteren Strom aufnehmen kann.

In der US 2009/243558 A1 ist eine Treiberschaltung für eine Gasentladungslampe beschrieben. Die Schaltung umfasst einen Gleichrichter, einen Hochsetzsteller und einen Wechselrichter. Der Gleichrichter wandelt eine dreiphasige Wechselspannung in eine gleichgerichtete Spannung um. Der Hochsetzsteller erzeugt aus der gleichgerichteten Spannung mittels zweier Halbleiterschalter, zweier Dioden und einer Spule nach dem "Charge-and-Pump"-Prinzip eine Hochvoltspannung zum Betreiben der Gasentladungslampe. Aus der Hochvoltspannung wird durch den Wechselrichter eine zweiphasige Wechselspannung erzeugt, welche an Elektroden in dem Gas übertragen wird.

Es ist Aufgabe der vorliegenden Erfindung, für einen Frequenzumrichter der beschriebenen Art einen ausreichenden Schutz für dessen Einspeiseeinheit bereitzustellen.

Die Aufgabe wird durch einen Frequenzumrichter gemäß Patentanspruch 1 und ein Verfahren gemäß Patentanspruch 9 gelöst. Vorteilhafte Weiterbildungen der Erfindung sind durch die Unteransprüche gegeben.

Der erfindungsgemäße Frequenzumrichter ist eine Weiterbildung des gattungsgemäßen Frequenzumrichters, wie er im Zusammenhang mit FIG 1 erläutert ist. Bei dem erfindungsgemäßen Frequenzumrichter weist einer der Schaltungszweigs eine Drossel auf. Ein Anschluss der Drossel ist mit einem Anschluss des Zwischenkreiskondensators und ein zweiter Anschluss der Drossel ist über einen Halbleiterschalter mit einem Zwischenkreisanschluss der Einspeiseeinheit und über eine Freilaufdiode mit dem zweiten Schaltungszweig verschaltet ist. Die beiden Anschlüsse der Drossel werden im Folgenden entsprechend kondensatorseitiger und schalterseitiger Anschluss genannt.

Der Halbleiterschalter ist dazu ausgelegt, eine Stromstärke eines von der Einspeiseeinheit in den Zwischenkreiskondensator fließenden elektrischen Stromes in Abhängigkeit von einem Steuersignal zu steuern. Entsprechend wird zum Aufladen des Zwischenkreiskondensators in der Vorladephase gemäß dem erfindungsgemäßen Verfahren zunächst die Einspeiseeinheit mit dem Netz gekoppelt und anschließend der Zwischenkreiskondensator mit elektrischer Energie aus dem Netz aufgeladen. Hierbei wird eine mittlere Stromstärke eines von der Einspeiseeinheit in den Zwischenkreiskondensator fließenden elektrischen Stromes, d.h. eines Ladestromes des Zwischenkreiskondensators, durch Erzeugen eines Steuersignals an einem Steuereingang des Halbleiterschalters von einer Steuereinrichtung gesteuert.

Bei dem erfindungsgemäßen Frequenzumrichter ergibt sich der Vorteil, dass der Ladestrom des Zwischenkreiskondensators in der Vorladephase auch bei anfangs ungeladenem Zwischenkreiskondensator in Bezug auf seine Stromstärke gesteuert werden kann. Somit kann verhindert werden, dass eine mittlere Stromstärke des Ladestroms einen kritischen Wert überschreitet, der zu einer Zerstörung von Komponenten der Einspeiseeinheit führen würde. Eine zeitliche Veränderung der Stromstärke wird durch die Drossel ebenfalls begrenzt. Dadurch ist es nicht nötig, dass der Halbleiterschalter beispielsweise in einem pulsweitenmodulierten Schaltbetrieb besonders schnell schalten können muss. So können 1 kHz bis 20 kHz Schaltfrequenz ausreichend sein. Durch die Drossel wird hierbei keine kritische Spannung induziert. Wenn der Halbleiterschalter geöffnet wird, ist der Strom durch die Drossel nicht abrupt unterbrochen, da dieser anstatt über den Halbleiterschalter über die Freilaufdiode geführt wird.

Bei dem erfindungsgemäßen Frequenzumrichter lässt sich die Einspeiseeinheit jedoch nicht nur beim Aufladen des Zwischenkreiskondensators effektiv schützen. Während der Betriebsphase kann der Halbleiterschalter im Fehlerfall, z.B. bei einem Brückenkurzschluss im Umrichter oder bei einem Durchbruch im Zwischenkreis, einen Kurzschlussstrom aus dem Netz unterbrechen und so die Einspeiseeinheit vor einer sekundären Zerstörung schützen.

Die Steuereinrichtung zum Erzeugen des Steuersignals für den Halbleiterschalter kann in vorteilhafter Weise dazu ausgebildet sein, das Steuersignal in Abhängigkeit von einer Messgröße zu erzeugen, welche von einem Betriebszustand des Frequenzumrichters abhängig ist. Beispielsweise kann eine über dem Zwischenkreiskondensator abfallende Spannung gemessen und bei der Steuerung von dessen Ladestrom berücksichtigt werden. Eine solche Regelung ermöglicht es, auch bei unbekannter Zwischenkapazität oder bei angeschlossenen elektrischen Lasten (z.B. einem Schaltnetzteil zur Spannungsversorgung einer Steuereinrichtung des Frequenzumrichters) den durch die Einspeiseeinheit fließenden Strom stets unter dem kritischen Wert zu halten. Für die Regelung des Ladestromes kann z.B. ein Zweipunkt-Regelungsverfahren zugrunde gelegt werden.

Als Steuersignal kann ein getaktetes, insbesondere ein pulsweitenmoduliertes Signal an den Steuereingang des Halbleiterschalters übertragen werden. Durch solche Signale wird die in dem Halbleiterschalter umgesetzte Verlustleistung und somit eine thermische Belastung des Halbleiterschalters gering gehalten.

Alternativ zum getakteten Betrieb kann der Halbleiterschalter durch ein entsprechendes Steuersignal auch als steuerbare Stromquelle betrieben werden. Hierbei wird eine (momentane) Stromstärke eines durch den Halbleiterschalter fließenden Laststroms durch Einstellen des Steuersignals gesteuert. Unter einem Laststrom ist bei einem Bipolartransistor der Kollektor-Emitter-Strom zu verstehen, bei einem FET der Drain-Source-Strom. Im Betrieb als steuerbare Stromquelle ist die Stromstärke des Laststromes nahezu unabhängig von der Spannung, die über dem Halbleiterschalter in Flussrichtung des Laststromes abfällt. Die Stromstärke ist stattdessen über das Steuersignal, d.h. eine eingestellte Steuerspannung oder den eingestellten Steuerstrom, am Steuereingang (Basis bzw. Gate) des Halbleiterschalters einstellbar. Bei einem Bipolartransistor entspricht diese Betriebsweise dem Betrieb im aktiven oder Verstärkungsbereich, bei einem FET dem Betrieb im Sättigungsbereich.

Der Halbleiterschalter kann einen Transistor umfassen. Da dieser wegen der Drossel nicht besonders schnell schalten können muss, kann ein kostengünstiger Si-Transistor, also ein Transistor, auf Siliziumbasis, verwendet werden. Für spezielle Fälle kann der Halbleiterschalter auch einen SiC-MOSFET (SiC - Siliziumcarbid; MOS - Metall-Oxid-Halbleiter; FET - Feldeffekttransistor) oder einen SiC-JFET (JFET - Sperrschicht-FET, Junction-FET). SiC-basierte Transistoren sind sehr Hitzebeständig.

Bevorzugt ist der Halbleiterschalter selbstsperrend, d.h. bei einer Steuerspannung von 0 V befindet er sich in einem sperrenden Zustand. Dadurch ist in vorteilhafter Weise verhindert, dass bei einem Ausfall der Steuereinrichtung für den Halbleiterschalter ein unkontrollierter Strom in dem Zwischenkreis fließt.

Der Halbleiterschalter muss nicht aus einem einzigen Bauteil bestehen. Er kann z.B. auch eine Kaskodenschaltung aus einem MOSFET und einem JFET umfassen. Dann ergibt sich der Vorteil, dass in dem Zwischenkreis des Frequenzumrichters ein selbstsperrender Halbleiterschalter bereitgestellt ist, bei dem eine Sperrschicht des MOSFET gegen eine Beschädigung durch eine Überspannung geschützt ist. Der JFET ist bevorzugt auf der Grundlage von Siliziumcarbid (SiC) gefertigt.

Um einen Stromfluss vom Umrichter zur Einspeiseeinheit zu ermöglichen, wie er sich in einem Generatorbetrieb einer am Frequenzumrichter angeschlossenen elektrischen Maschine ergibt, kann die Drossel mit einer Diode überbrückt sein, bei der die Durchlassrichtung vom Umrichter zur Einspeiseeinheit ausgerichtet ist. Dann hat die Induktivität der Drossel keinen Einfluss auf den Stromfluss im generatorischen Betrieb.

Eine andere vorteilhafte Weiterbildung des erfindungsgemäßen Frequenzumrichters ergibt sich, wenn in dem Zwischenkreis zusätzlich ein elektromechanischer Schalter zum Überbrücken des Halbleiterschalters und/oder der Drossel bereitgestellt ist. Dann kann in der Betriebsphase die Verlustleistung im Zwischenkreis durch Schließen des mechanischen Schalters reduziert werden.

Der erfindungsgemäße Frequenzumrichter weist in dem Zwischenkreis zusätzlich einen Kommutierungskondensator auf, durch den eine Kommutierungskapazität für die Einspeiseeinheit bereitgestellt ist. Der Halbleiterschalter ist hierbei zwischen den Kommuntierungskondensator und den Zwischenkreiskondensator geschaltet. Mit anderen Worten ist der Kommutierunskondensator auch bei geöffnetem (sperrendem) Halbleiterschalter elektrisch mit der Einspeiseeinheit verbunden. Mit der Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger zehn Prozent, insbesondere weniger als ein Prozent, der Zwischenkreiskapazität. Ein Betrag der Kommutierungskapazität kann auch in Abhängigkeit von einem Induktivitätswert der bereits beschriebenen Drosseln und/oder einer Induktivität des Netzes, an das der Frequenzumrichter angeschlossen ist, gewählt sein.

Mittels der Kommutierungskapazität kann erreicht werden, dass eine beim Schalten von Komponenten des Einspeisewandlers entstehende Induktionsspannung stets unterhalb eines für die Funktionstüchtigkeit des Frequenzumrichters kritischen Spannungswert bleibt. Indem die Kommutierungskapazität sehr viel kleiner als die Zwischenkreiskondensator-Kapazität gewählt ist, ist sichergestellt, dass durch einen Ladestrom des Kommutierungskondensators der Einspeisewandler beim Schließen des Hauptschützes nicht beschädigt wird.

Durch den Kommutierungskondensator lässt sich der Zwischenkreiskondensator in mehreren aufeinanderfolgenden Umladezyklen wie folgt aufladen. In jedem Umladezyklus wird bei sperrendem Halbleiterschalter zunächst der Kommutierungskondensator mit elektrischer Energie aus dem Netz aufgeladen. Anschließend wird die Energie aus dem Kommutierungskondensator in den Zwischenkreiskondensator umgeladen, indem der Halbleiterschalter in einen leitenden Zustand geschaltet wird.

Der Halbleiterschalter ist auch zum wahlweisen Unterbrechen eines von dem Einspeisewandler zum Umrichter fließenden Stromes ausgelegt ist. Mit anderen Worten ist der Halbleiterschalter dann nicht nur dem Zwischenkreiskondensator selbst vorgeschaltet. Stattdessen ist er im Zwischenkreis so verschaltet, dass er auch den Stromfluss zum Umrichter unterbrechen kann. Der Halbleiterschalter wird zusätzlich zum Abschalten des Zwischenkreises (und dem daran angeschlossenen Umrichter und einer elektrischen Maschine) im Fehlerfall genutzt. Hierbei kann es allerdings zur Induktion einer Überspannung durch die Induktivität des Versorgungsnetzes und gegebenenfalls der Kommutierungsdrosseln kommen.

Erfindungsgemäß ist deshalb ein weiterer Kommutierungskondensator in dem Zwischenkreis bereitgestellt, der durch einen Schalter zugeschaltet werden kann. Im geschlossenen Zustand verbindet der Schalter einen Anschluss des weiteren Kommutierungskondensators mit dem Zwischenkreis elektrisch. Dieser weitere Kommutierungskondensator kann dann bedarfsweise zugeschaltet werden, damit die elektrische Spannung am permanent zugeschalteten Kommutierungskondensator nicht zu groß wird und diesen oder den Halbleiterschalter beschädigt. Der Schalter für den weiteren Kommutierungskondensator kann als elektromechanischer Schalter oder als elektrischer Schalter ausgeführt sein.

Dem Schalter kann ein elektrischer Widerstand parallel geschaltet sein. Dann sind ein Vorladen und Entladen des weiteren Kommutierungskondensators bei geöffnetem Schalter möglich. Durch den Widerstandswert des Widerstands kann hierbei die Stromstärke des Stroms festgelegt werden. Auch zu dem weiteren Kommutierungskondensator kann zumindest ein Entladewiderstand parallel geschaltet sein. Dann muss die in dem weiteren Kommutierungskondensator nach einer Notabschaltung gespeicherte elektrische Energie nicht mehr zurück in den Zwischenkreis gespeist werden, sondern kann über den parallel geschalteten Widerstand abgebaut werden.

Dem Schalter kann auch eine Diode zum Entladen des weiteren Kommutierungskondensators parallel geschaltet. Dann ist die Entladegeschwindigkeit höher als bei einer Entladung über einen Widerstand.

Eine zum Schalter in Reihe geschaltete Diode kann ein Entladen des weiteren Kommutierungskondensators über den Schalter verhindern, so dass dieser vor einer Überhitzung geschützt ist.

Der kondensatorseitige Anschluss der Drossel kann ebenfalls über eine Diode mit dem weiteren Kommutierungskondensator verbunden sein. Die Diode ist bei dieser Ausführungsform vom kondensatorseitigen Anschluss zum weiteren Kommutierungskondensator hin stromdurchlässig. Vorteil hierbei ist, dass der weitere Kommutierungskondensator wie der Zwischenkreiskondensator über die Drossel vorgeladen werden kann.

Zusätzlich zu dem weiteren Kommutierungskondensator kann auch mittels des Halbleiterschalters für den Zwischenkreiskondensator ein Schutz vor einer Überspannung bei einem Not-Aus bewirkt werden. Gemäß einer entsprechenden Weiterbildung des erfindungsgemäßen Verfahrens wird der Halbleiterschalter zum Abbrechen einer Betriebsphase zunächst geöffnet, um einen Stromfluss von der Einspeiseeinheit zum Zwischenkreiskondensator und zum Umrichter zu unterbrechen. Danach wird eine über dem Kommutierungskondensator oder dem Halbleiterschalter abfallende Spannung ermittelt. Falls diese ermittelte Spannung betragsmäßig größer als ein vorbestimmter Schwellenwert ist, wird der Halbleiterschalter wieder geschlossen. Hierdurch kann elektrische Ladung vom Kommutierungskondensator in den Zwischenkreiskondensator abfließen, so dass die Spannung am Kommutierungskondensator sinkt. Da die Kapazität des Zwischenkreiskondensators signifikant größer ist, steigt hierbei die Spannung am Zwischenkreiskondensator nur verhältnismäßig wenig an. Der Halbleiterschalter kann mehrmals kurzzeitig während des Abschaltvorgangs wieder geschlossen werden, z.B. für jeweils weniger als 1 s, insbesondere weniger als 100 ms. Das Schließen des Halbleiterschalters und das erneute Öffnen kann in Abhängigkeit von der ermittelten Spannung erfolgen.

Im Folgenden wird die Erfindung anhand von bevorzugten Ausführungsbeispielen noch einmal näher erläutert. Dazu zeigt:
- FIG 1: ein Blockschaltbild eines Frequenzumrichters gemäß dem Stand der Technik, mit dem eine elektrische Maschine an einem Netz betrieben wird,
- FIG 2: ein Blockschaltbild eines weiteren Frequenzumrichters gemäß dem Stand der Technik,
- FIG 3: ein Blockschaltbild eines Frequenzumrichters gemäß einer Ausführungsform des erfindungsgemäßen Frequenzumrichters mit zuschaltbarem Kommutierungskondensator und
- FIG 4: ein Blockschaltbild eines Frequenzumrichters gemäß einer weiteren Ausführungsform des erfindungsgemäßen Frequenzumrichters mit zuschaltbarem Kommutierungskondensator, der über eine Drossel vorladbar ist.

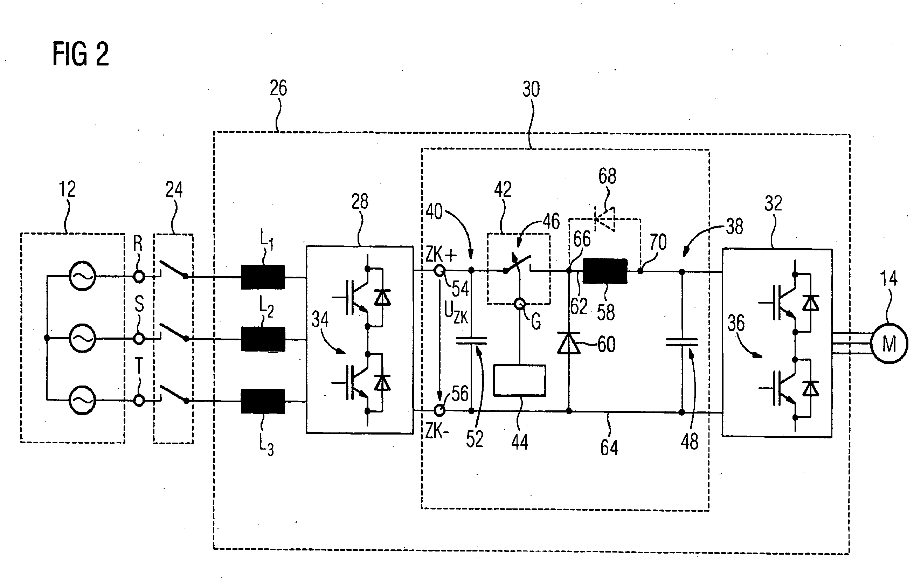

In FIG 2 ist ein Frequenzumrichter 26 gezeigt, der über ein Hauptschütz 24 an Phasen R, S, T eines Netzes 12 angeschlossen ist. An den Frequenzumrichter 26 ist eine elektrische Maschine 14 angeschlossen. Das Netz 12, das Hauptschütz 24 und die elektrische Maschine 14, die in FIG 2 gezeigt sind, entsprechen den in FIG 1 gezeigten Elementen mit den gleichen Bezugszeichen. Diese Elemente sind hier deshalb nicht noch einmal erläutert.

Bei dem Frequenzumrichter 26 ist eine Einspeiseeinheit 28 über einen Zwischenkreis 30 mit einem Umrichter 32 verschaltet.

Die Einspeiseeinheit 28 kann in bekannter Weise ausgestaltet sein. Sie weist in dem gezeigten Beispiel zum Gleichrichten der zwischen den Phasen R, S, T anliegenden Wechselspannungen drei Halbbrücken auf, von denen in FIG 2 der Übersichtlichkeit halber nur eine Halbbrücke 34 ohne weitere Verschaltungselemente dargestellt ist. Die Einspeiseeinheit 28 kann auch als Wechselrichter zum Einspeisen von elektrischer Energie in das Netz 12 betrieben werden.

Der Umrichter 32 kann ebenfalls in bekannter Weise ausgestaltet sein. In dem vorliegenden Beispiel umfasst er drei Halbbrücken, von denen in FIG 2 lediglich eine Halbbrücke 36 (ohne Verschaltungselemente) dargestellt ist. Der Umrichter 32 ist hier als Wechsel- und als Gleichrichter betreibbar.

Der Einspeiseeinheit 28 sind netzseitig Drosseln L₁, L₂, L₃ vorgeschaltet, die als Kommutierungsinduktivitäten ausgebildet sind.

Ein umrichterseitiger Teil 38 des Zwischenkreises 30 und ein einspeiseseitiger Teil 40 sind über eine Schalteinrichtung 42 miteinander verschaltet. Ein Steuereingang G eines Si-Transistors 46 der Schalteinrichtung 42 ist mit einer Steuereinrichtung 44 gekoppelt. Über den Si-Transistor 46 sind der einspeiseseitige Teil 40 und der umrichterseitige Teil 38 des Zwischenkreises 30 miteinander gekoppelt. Die Steuereinrichtung 44 steuert einen Durchgangswiderstand des Si-Transistors 46 durch Erzeugen einer entsprechenden Steuerspannung am Steuereingang G. Der Si-Transistor 46 ist hier ein selbstsperrendes Bauteil. Anstelle des Si-Trainstor 46 kann beispielsweise auch ein SiC-MOSFET, ein SiC-JFET oder eine Kaskodenschaltung aus einem MOSFET und eine JFET verwendet sein.

Im umrichterseitigen Teil 38 befindet sich ein Zwischenkreiskondensator 48. Eine Kapazität des Zwischenkreiskondensators 48 kann in dem gezeigten Beispiel größer 1 mF sein. Anstelle eines einzelnen Zwischenkreiskondensators 48 können auch mehrere Kondensatoren zum Bereitstellen der Zwischenkreisinduktivität bereitgestellt sein.

In dem einspeiseseitigen Teil 40 sind Stromschienen des Zwischenkreises über einen Kommutierungskondensator 52 kapazitiv miteinander gekoppelt. Der Kommutierungskondensator 52 kann ein Keramik- oder Folienkondensator sein. Die Kapazität des Kommutierungskondensators 52 ist in diesem Beispiel kleiner als 5 µF. Sie ist aber im Allgemeinen in Abhängigkeit von einer über den Frequenzumrichter 26 leitbaren Gesamtleistung gewählt, wobei sie zudem bevorzugt weniger als zehn Prozent der Kapazität des Zwischenkreiskondensators 48 beträgt.

Der Kapazitätswert des Zwischenkreiskondensators 48, d.h. die Zwischenkreiskapazität, ist derart groß, dass beim Schließen des Hauptschützes 24 die Halbbrücke 34 (und die übrigen Halbbrücken der Einspeiseeinheit 28) beschädigt würden, wenn der Ladestrom des Zwischenkreiskondensators 48 nicht begrenzt würde. Bei dem Frequenzumrichter 26 wird der Zwischenkreiskondensator 48 in einer Vorladephase mit einem Ladestrom aufgeladen, dessen Stromstärke einen kritischen Wert nicht überschreitet. Dazu stellt die Steuereinheit 44 die Steuerspannung am Steuereingang G derart ein, dass eine Stromstärke des durch den Si-Transistor 46 fließenden Ladestroms des Zwischenkreiskondensators 48 entsprechend begrenzt ist.

Die Vorladung des Zwischenkreises 30 kann getaktet durchgeführt werden. Dazu wird zunächst der Si-Transistor 46 in einen sperrenden Zustand geschaltet, so dass der umrichterseitige Teil 38 des Zwischenkreises 30 von der Einspeiseeinheit 28 elektrisch getrennt ist. Anschließend wird das Hauptschütz 24 geschlossen, so dass die Einspeiseeinheit 28 an zwischenkreisseitgen Anschlüssen 54, 56 eine gleichgerichtete Spannung Uzk erzeugt. Die Stromaufnahme des Kommutierungskondensators 52 ist hierbei nur durch die Kommutierungskapazität der Drosseln L₁, L₂, L₃ begrenzt. Da die Kommutierungskapazität des Kommutierungskondensators 52 verhältnismäßig klein ist, ist dieser schnell auf den Gleichrichtwert der Netzspannung geladen. Somit steigt trotz der harten, d.h. abrupten Anschaltung des Kommutierungskondensators 52 an das Netz 12 die mittlere Stromstärke nicht über einen für die Einspeiseeinheit 28 kritischen Wert. Da der Si-Transistor 46 während dieses Vorgangs sperrt, bleibt der Zwischenkreiskondensator 48 ungeladen.

Für die getaktete Vorladung des Zwischenkreiskondensators 48 wird von der Steuereinheit 44 am Steuereingang G ein getaktetes Steuersignal erzeugt, dessen Puls-Pause-Zeiten nach Bedarf und nach Größe der Zwischenkreiskapazität gewählt werden können. Durch das Steuersignal wird der Si-Transistor 46 puls- oder stoßweise in einen leitenden Zustand geschaltet, so dass elektrische Ladung von dem Kommutierungskondensator 52 über den Si-Transistor 46 in den Zwischenkreiskondensator 48 transferiert wird.

Der hierbei fließende Umladestrom wird durch eine Drossel 58 begrenzt. So ist es möglich, auch bei einer sehr geringen parasitären Induktivität des Kommutierungskonderisators 52 und des Zwischenkreiskondensators 48 sowie bei einem geringen ESR (ESR - equivalent series resistance, äquivalenter Reihenwiderstand) dieser beiden Kondensatoren den Si-Transistor 46 vollständig leitend zu schalten. Die in dem Si-Transistor 46 umgesetzte Verlustleistung bleibt aufgrund des begrenzten Umladestromes so gering, dass der Si-Transistor 46 nicht beschädigt wird.

Während der Einschaltzeit im Verlauf eines Umladezyklus kann der Si-Transistor 46 durchgehend in einen leitenden Zustand geschaltet sein oder aber mehrmals jeweils nur für kurze Zeit geöffnet werden, z.B. mit einer Schaltfrequenz von 1 kHz bis 20 kHz. Nach einer bestimmten Einschaltzeit wird der erste Umladezyklus beendet, indem der Si-Transistor 46 wieder dauerhaft in den sperrenden Zustand geschaltet wird. Der Kommütieruhgskondensator 52 wird hierdurch erneut mit elektrischer Energie aus dem Netz 12 über Dioden der Halbbrücken der Einspeiseeinheit 28 aufgeladen, d.h. ein zweiter Umladezyklus wird begonnen.

Eine Freilaufdiode 60 dient dem Freilauf der Drossel 58 nach jedem Öffnen des Si-Transistor 46. Die Freilaufdiode 60 ist dazu zwischen zwei Stromschienenzweige 62, 64 des Zwischenkreises 30 geschaltet. In dem gezeigten Beispiel verbindet die Freilaufdiode 60 den Minuspotential-Stromschienenzweig 64 mit einem schalterseitigen Anschluss 66 der Drossel 58 im Pluspotential-Stromschienenzweig 62. Der Freilaufstrom kann zwischen dem Zwischenkreiskondensator und der Freilaufdiode fließen, da der Zwischenkreiskondensator und die Freilaufdiode einerseits gemeinsam an einem der Stromschienenzweige angeschlossen sind und andererseits über die Drossel gekoppelt sind.

Es werden so viele Umladezyklen durchgeführt, bis eine gewünschte Vorladespannung am Zwischenkreiskondensator 48 erreicht ist. Dies kann beispielsweise der Gleichrichtwert der Netzspannung sein. Nach Erreichen dieser Vorladeschwellwertspannung wird der Si-Transistor 46 dauerhaft in einen leitenden Zustand geschaltet, so dass eine möglichst geringe Spannung über ihm abfällt. Die in der daraufhin folgenden Betriebsphase auftretenden Verluste am Si-Transistor 46 sind somit verhältnismäßig gering.

Anstelle der getakteten Vorladung kann der Si-Transistor 46 für das Umladen der elektrischen Energie auch als gesteuerte Stromquelle betrieben werden. Hierzu wird er nur zu einem Teil aufgesteuert, so dass er sich zwar in einem leitenden Zustand befindet, aber die über ihm abfallende Spannung groß genug ist, um den Laststrom in der gewünschten Weise zu begrenzen.

Bei der Vorladung kann das Steuersignal für den Steuereingang G einen fest vorgegebenen Verlauf aufweisen. Es ist aber auch ein geregelter Betrieb möglich, in welchem das Steuersignal, z.B. die Puls-Pause-Zeiten eines Rechtecksignals im getakteten Betrieb, in Abhängigkeit von einer Messgröße eingestellt wird. Beispielsweise kann dazu ein Ladezustand des Zwischenkreiskondensators 48 ermittelt werden.

Für einen generatorischen Betrieb der elektrischen Maschine 14 kann die Drossel 58 optional durch eine Diode 68 überbrückt sein, die einen kondensatorseitigen Anschluss 70 der Drossel 58 mit dem schalterseitigen Anschluss 66 verbinden kann.

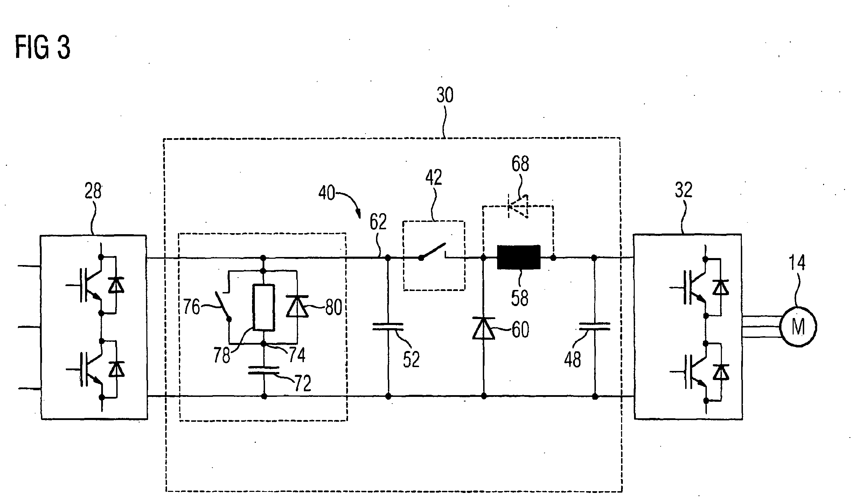

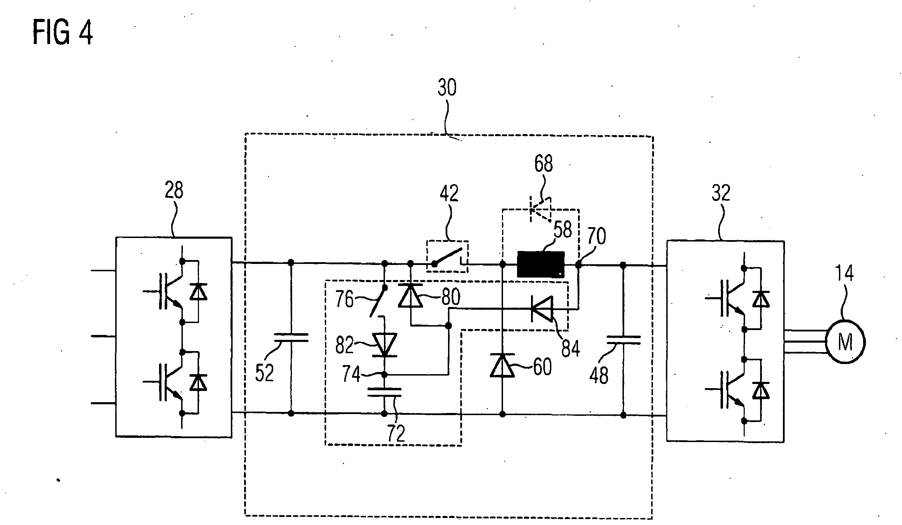

Anhand von FIG 3 und FIG 4 sind zwei vorteilhafte Schaltungsvarianten eines erfindungsgemäßen Frequenzumrichters beschrieben. In FIG 3 und FIG 4 sind dabei Elemente, die in ihrer Funktionsweise Elementen entsprechend, die im Zusammenhang mit FIG 1 und FIG 2 erläutert wurden, mit denselben Bezugszeichen wie in FIG 1 bzw. FIG 2 versehen.

In FIG 3 ist ein Zwischenkreis 30 gezeigt, in welchem in einem einspeiseseitigen Teil 40 parallel zu einem Kommutierungskondensator 52 ein weiterer Kommutierungskondensator 72 bereitgestellt ist. Der weitere Kommutierungskondensator 72 ist bedarfsweise zuschaltbar. Hierzu ist ein Anschluss 74 des Kommutierungskondensators 72 mit einem Stromschienenzweig 62 über einen Schalter 76, z.B. einem elektromechanischen oder elektrischen Schalter, verbunden. Optional kann dem Schalter 76 ein elektrischer Widerstand 78 und/oder eine Entladediode 80 für den Kommutierungskondensator 72 parallel geschaltet sein.

In FIG 4 ist ein Zwischenkreis 30 gezeigt, in welchem ebenfalls ein über einen Schalter 76 zuschaltbarer weiterer Kommutierungskondensator 72 bereitgestellt ist. Ein Stromfluss aus dem Kommutierungskondensator 72 zurück zum Schalter 76 ist durch eine Diode 82 blockiert. Eine Aufladediode 84 verbindet einen kondensatorseitigen Anschluss 70 einer Drossel 58 mit einem Anschluss 74 des Kommutierungskondensators 72, über welchen der Kommutierungskondensators 72 auch mit dem Schalter 76 gekoppelt ist.

In den gezeigten Beispielen ist vorgesehen, dass der Schalter der Schalteinrichtung 42 im Fehlerfall (z.B. bei einem Zwischenkreiskurzschluss) geöffnet wird. Der Strom aus der Einspeiseeinheit 28 kommutiert dann auf den Kommutierungskondensator 52. Sollte dessen Kapazität nicht ausreichen, um die in den Kommutierungsdrosseln L1 bis L3 gespeicherte Energie aufzunehmen, so dass die Spannung Uzk am Kommutierungskondensator 52 einen Grenzwert überschreitet, so kann die Schalteinrichtung 42 kurzzeitig durchgeschaltet werden (z.B. für weniger als 1 s, insbesondere weniger als 100 ms), um die Spannung Uzk abzubauen bis sie einen vorgegebenen Wert, z.B. den Grenzwert, wieder unterschreitet. Dies wird dann so oft wiederholt, bis die Spannung am Kommutierungskondensator 52 den Grenzwert dauerhaft unterschreitet. Das kurzzeitige Durchschalten der Schalteinrichtung 42 im Fehlerfall ist für die Halbbrücke 34 der Einspeiseeinrichtung 28 und auch für die Schalteinrichtung 42 selbst unkritisch, solange deren maximale Kurzschlusszeiten nicht überschritten werden.

Zusätzlich kann die einspeiseseitige Kommutierungskapazität durch Zuschalten des weiteren Kommutierungskondensators 72 vergrößert werden.

Die Beispiele veranschaulichen, wie durch eine Drossel 58 im Zwischenkreis 30 eines Frequenzumrichters 26 ein Schalter, z.B. ein SI-Transistor, während einer Vorladung eines Zwischenkreiskondensators 48 mit einem langsameren Takt als ohne Drossel betrieben werden kann, da der Stromanstieg durch die Drossel 58 begrenzt wird. Die Ansteuerschaltung der Schalteinheit 44 kann somit deutlich weniger aufwändig und damit kostengünstiger ausgestaltet sein. Zudem kann ein günstiger Si-Transistor 46 anstelle eines schneller schaltenden SiC-Transistors verwendet werden. Durch die Wahl der Induktivität des Kommutierungskondensators 72 kann der Umladestrom eingestellt werden und somit insgesamt der Zwischenkreisladestrom.

## Patentansprüche

1. Frequenzumrichter (26) zum Betreiben einer elektrischen Maschine (14) an einem elektrischen Netz (12), wobei
- der Frequenzumrichter (26) eine Einspeiseeinheit (28) und einen Umrichter (32) aufweist, die miteinander über einen Gleichspannungs-Zwischenkreis (30) verschaltet sind, in welchem durch einen Zwischenkreiskondensator (48) ein erster und ein zweiter Schaltungszweig (62, 64) des Zwischenkreises (30) verbunden sind,
- der erste Schaltungszweig (62) eine Drossel (58) aufweist, bei welcher ein kondensatorseitiger Anschluss (70) mit einem Anschluss des Zwischenkreiskondensators (48) verschaltet ist und ein schalterseitiger Anschluss (66) über einen Halbleiterschalter (42) mit einem Zwischenkreisanschluss (54) der Einspeiseeinheit (28) einerseits und über eine Freilaufdiode (60) mit dem zweiten Schaltungszweig (64) andererseits verschaltet ist,
- der Halbleiterschalter (42) dazu ausgelegt ist, während einer Vorladephase des Zwischenkreiskondensators (48) eine Stromstärke eines von der Einspeiseeinheit (28) in den Zwischenkreiskondensator (48) fließenden elektrischen Stromes in Abhängigkeit von einem Steuersignal zu steuern,
- der Halbleiterschalter (42) dazu ausgelegt und im Zwischenkreis (30) verschaltet ist, um im Zwischenkreis (30) auch den Stromfluss zum Umrichter (32) wahlweise zu unterbrechen,
- der Zwischenkreis (30) einen Kommutierungskondensator (52) aufweist, durch welchen eine Kommutierungskapazität für die Einspeiseeinheit (28) bereitgestellt ist,
- der Halbleiterschalter (42) zwischen den Kommutierungskondensator (52) und den Zwischenkreiskondensator (48) geschaltet ist und
- der Zwischenkreis (30) einen weiteren Kommutierungskondensators (72) und einen Schalter (76) aufweist, welcher im geschlossenen Zustand einen Anschluss (74) des weiteren Kommutierungskondensators (72) mit einem der Schaltungszweige (62,64) elektrisch verbindet.

2. Frequenzumrichter (26) nach Anspruch 1, wobei der Halbleiterschalter (42) einen Transistor, insbesondere einen Si-Transistor (46), umfasst, wobei der Halbleiterschalter (42) bevorzugt selbstsperrend ist.

3. Frequenzumrichter (26) nach Anspruch 1 oder 2, bei dem die Drossel (58) mit einer Diode (68) überbrückt ist, wobei eine Durchlassrichtung der Diode (68) vom Umrichter (32) zur Einspeiseeinheit (28) ausgerichtet ist.

4. Frequenzumrichter nach einem der vorhergehenden Ansprüche, **dadurch gekennzeichnet, dass** dem Schalter (76) ein elektrischer Widerstand (78) parallel geschaltet ist.

5. Frequenzumrichter nach einem der vorhergehenden Ansprüche, **dadurch gekennzeichnet, dass** dem Schalter (76) eine Diode (80) zum Entladen des weiteren Kommutierungskondensators (72) parallel geschaltet ist.

6. Frequenzumrichter nach einem der vorhergehenden Ansprüche, wobei bei dem Schalter (76) eine zum Schalter (76) in Reihe geschaltete Diode (82) ein Entladen des weiteren Kommutierungskondensators(72) über den Schalter (76) blockiert.

7. Frequenzumrichter nach einem der vorhergehenden Ansprüche, **dadurch gekennzeichnet, dass** der kondensatorseitige Anschluss (70) der Drossel (58) über eine Diode (84) mit dem weiteren Kommutierungskondensator (72) verbunden ist, wobei die Diode (84) von dem kondensatorseitigen Anschluss (70) zum weiteren Kommutierungskondensator (72) hin stromdurchlässig ist.

8. Frequenzumrichter nach einem der vorhergehenden Ansprüche, **dadurch gekennzeichnet, dass** dem weiteren Kommutierungskondensator (72) zumindest ein Entladewiderstand parallel geschaltet ist.

9. Verfahren zum Betreiben eines Frequenzumrichters (26) gemäß einem der vorhergehenden Ansprüche, umfassend die Schritte:
- Koppeln der Einspeiseeinheit (28) mit dem Netz (12);
- in einer Vorladephase Aufladen des Zwischenkreiskondensators (48) mit elektrischer Energie aus dem Netz (12) und hierbei Steuern einer Stromstärke eines in den Zwischenkreiskondensator (48) fließenden Ladestromes durch Erzeugen eines Steuersignals an einem Steuereingang (G) des Halbleiterschalters (42), wobei eine zeitliche Veränderung der Stromstärke durch die Drossel (58) begrenzt wird und bei Öffnen des Halbleiterschalters (42) der Ladestrom anstatt über den Halbleiterschalter (42) über die Freilaufdiode (60) geführt wird,
- während der Betriebsphase Unterbrechen eines Kurzschlussstromes aus dem Netz im Fehlerfall durch den Halbleiterschalter (42).

10. Verfahren nach Anspruch 9, bei dem das Steuersignal durch eine Steuereinrichtung (44) in Abhängigkeit von einer von einem Betriebszustand des Frequenzumrichters (26) abhängigen Messgröße, insbesondere einer über dem Zwischenkreiskondensator (48) abfallenden Spannung, erzeugt wird, wobei die Steuereinrichtung (44) die Stromstärke insbesondere anhand eines Zweipunkt-Regelverfahrens regelt.

11. Verfahren nach Anspruch 9 oder 10, wobei in der Vorladephase zum Steuern der Stromstärke als Steuersignal ein getaktetes, insbesondere ein pulsweitenmoduliertes, Signal an den Steuereingang (G) übertragen wird.

12. Verfahren nach einem der Ansprüche 9 bis 11 zum Betreiben eines Frequenzumrichters gemäß einem der Ansprüche 1 bis 8, wobei in der Vorladephase zum Aufladen des Zwischenkreiskondensators (48) elektrische Energie in aufeinanderfolgenden Umladezyklen von dem Kommutierungskondensator (52) in den Zwischenkreiskondensator (48) umgeladen wird und hierzu in jedem Umladezyklus bei sperrendem Halbleiterschalter (42) der Kommutierungskondensator (52) mit elektrischer Energie aus dem Netz (12) aufgeladen und anschließend bei leitendem Halbleiterschalter (42) der Zwischenkreiskondensator (48) mit der Energie aus dem Kommutierungskondensator (52) aufgeladen wird.

13. Verfahren nach einem der Ansprüche 9 bis 12 zum Betreiben eines Frequenzumrichters gemäß einem der Ansprüche 1 bis 8, wobei der Halbleiterschalter (42) zum Abbrechen einer Betriebsphase geöffnet wird, um einen Stromfluss von der Einspeiseeinheit (28) zum Zwischenkreiskondensator (48) und zum Umrichter (32) zu unterbrechen, danach eine über dem Kommutierungskondensator (52) oder dem Halbleiterschalter (42) abfallende Spannung ermittelt wird und der Halbleiterschalter (42) wieder geschlossen wird, falls die ermittelte Spannung betragsmäßig größer als ein vorbestimmter Schwellenwert ist.

## Claims

1. Frequency converter (26) for operating an electrical machine (14) on an electrical supply system (12), wherein
- the frequency converter (26) contains an infeed unit (28) and a converter (32), which are interconnected via a DC link (30), in which a first and a second circuit branch (62, 64) of the DC link (30) are connected by a DC link capacitor (48),
- the first circuit branch (62) contains a choke (58) in which a capacitor-side terminal (70) is connected to a terminal of the DC link capacitor (48) and a switch-side terminal (66) is connected on the one hand via a semiconductor switch (42) to a DC link terminal (54) of the infeed unit (28) and on the other hand via a freewheeling diode (60) to the second circuit branch (64),
- the semiconductor switch (42) is configured to control a current intensity of an electrical current flowing from the infeed unit (28) into the DC link capacitor (48) during a pre-charging phase of the DC link capacitor (48) in accordance with a control signal,
- the semiconductor switch (42) is configured and connected in the DC link (30) in order to also optionally interrupt the current flow to the converter (32) in the DC link (30)
- the DC link (30) contains a commutation capacitor (52) which provides a commutation capacitance for the infeed unit (28),
- the semiconductor switch (42) is connected between the commutation capacitor (52) and the DC link capacitor (48) and
- the DC link (30) contains an additional commutation capacitor (72) and a switch (76), which in the closed state electrically connects a terminal (74) of the additional commutation capacitor (72) to one of the circuit branches (62, 64).

2. Frequency converter (26) according to claim 1, wherein the semiconductor switch (42) contains a transistor, in particular an Si transistor (46), wherein the semiconductor switch (42) is preferably self-blocking.

3. Frequency converter (26) according to claim 1 or 2, in which the choke (58) is shunted by a diode (68), wherein the conducting direction of the diode (68) is oriented from the converter (32) to the infeed unit (28).

4. Frequency converter according to one of the preceding claims, **characterised in that** an electrical resistor (78) is connected in parallel with the switch (76).

5. Frequency converter according to one of the preceding claims, **characterised in that** a diode (80) for discharging the additional commutation capacitor (72) is connected in parallel with the switch (76).

6. Frequency converter according to one of the preceding claims, wherein at the switch (76) a diode (82) that is connected in series with the switch (76) blocks discharging of the additional commutation capacitor (72) via the switch (76).

7. Frequency converter according to one of the preceding claims, **characterised in that** the capacitor-side terminal (70) of the choke (58) is connected via a diode (84) to the additional commutation capacitor (72), wherein the diode (84) conducts current from the capacitor-side terminal (70) to the additional commutation capacitor (72).

8. Frequency converter according to one of the preceding claims, **characterised in that** at least one discharge resistor is connected in parallel with the additional commutation capacitor (72) .

9. Method for operating a frequency converter (26) according to one of the preceding claims, comprising the steps:
- coupling the infeed unit (28) to the supply system (12);
- in a pre-charging phase charging up the DC link capacitor (48) with electrical energy from the supply system (12) and in this connection controlling a current intensity of a charging current flowing in the DC link capacitor (48) by generating a control signal at a control input (G) of the semiconductor switch (42), wherein a time-dependent change in the current intensity is limited by the choke (58) and by opening the semiconductor switch (42) the charging current is routed via the freewheeling diode (60) instead of via the semiconductor switch (42),
- during the operating phase, in the event of a fault, interrupting a short-circuit current from the supply system by means of the semiconductor switch (42).

10. Method according to claim 9, in which the control signal is generated by a control device (44) in accordance with a measured variable which is dependent upon an operating state of the frequency converter (26), in particular a voltage drop across the DC link capacitor (48), wherein the control device (44) controls the current intensity, in particular by means of a two-step control method.

11. Method according to claim 9 or 10, wherein a clocked, in particular a pulse-width modulated signal, is transmitted as a control signal to the control input (G) to control the current intensity in the pre-charging phase.

12. Method according to one of claims 9 to 11 for operating a frequency converter according to one of claims 1 to 8, wherein in order to charge up the DC link capacitor (48) in the pre-charging phase, electrical energy is transferred from the commutation capacitor (52) into the DC link capacitor (48) in successive transfer cycles and in addition, in each transfer cycle with the semiconductor switch (42) in the blocking state, the commutation capacitor (52) is charged up with electrical energy from the supply system (12) and then with the semiconductor switch (42) in the conducting state, the DC link capacitor (48) is charged up with the energy from the commutation capacitor (52).

13. Method according to one of claims 9 to 12 for operating a frequency converter according to one of claims 1 to 8, wherein in order to abort an operating phase the semiconductor switch (42) is opened to interrupt a current flow from the infeed unit (28) to the DC link capacitor (48) and to the converter (32), after which a voltage drop across the commutation capacitor (52) or the semiconductor switch (42) is determined and the semiconductor switch (42) is reclosed if the value of the voltage thus determined exceeds a predetermined threshold value.

## Revendications

1. Convertisseur (26) de fréquence pour faire fonctionner une machine (14) électrique sur un réseau (12) électrique, dans lequel
- le convertisseur (26) de fréquence ayant une unité (28) d'alimentation et un convertisseur (32) qui sont reliés entre eux par un circuit (30) intermédiaire en tension continue, dans lequel sont montées, par un condensateur (48) de circuit intermédiaire, une première et une deuxième branches (62, 64) du circuit (30) intermédiaire,
- la première branche (62) du circuit a une bobine de self (58), à laquelle une borne (70) du côté du condensateur est reliée à une borne du condensateur (48) du circuit intermédiaire et une borne (66) du côté commutateur est reliée par un commutateur (42) à semi-conducteur à une borne (54) de circuit intermédiaire de l'unité (28) d'alimentation d'une part et par une diode (60) de roue libre à la deuxième branche (64) du circuit d'autre part,
- le commutateur (42) à semi-conducteur étant conçu pour, pendant une phase de pré-charge du condensateur (48) du circuit intermédiaire, commander, en fonction d'un signal de commande, une intensité d'un courant électrique passant de l'unité (28) d'alimentation au condensateur (48) de circuit intermédiaire,
- le commutateur (42) à semi-conducteur est conçu et monté dans le circuit (30) intermédiaire, pour interrompre au choix dans le circuit (30) intermédiaire également le flux de courant allant au convertisseur (32),
- le circuit (30) intermédiaire a un condensateur (52) de commutation, par lequel il est ménagé une capacité de commutation de l'unité (28) d'alimentation,
- le commutateur (42) à semi-conducteur étant monté entre le condensateur (52) de commutation et le condensateur (48) du circuit intermédiaire et
- le circuit (30) intermédiaire a un autre condensateur (72) de commutation et un commutateur (76), qui, à l'état fermé, relie électriquement une borne (74) de l'autre condensateur (72) de commutation à l'une des branches (62, 64) du circuit.

2. Convertisseur (26) de fréquence suivant la revendication 1, dans lequel le commutateur (42) à semi-conducteur comprend un transistor, notamment un transistor (46) au SI, le commutateur (42) à semi-conducteur étant de préférence à enrichissement.

3. Convertisseur (26) de fréquence suivant la revendication 1 ou 2, dans lequel la bobine de self (58) est shuntée par une diode (68), un sens passant de la diode (68) allant du convertisseur (32) à l'unité (28) d'alimentation.

4. Convertisseur (26) de fréquence suivant l'une des revendications précédentes, **caractérisé en ce qu'**une résistance (78) électrique est montée en parallèle au commutateur (76).

5. Convertisseur (26) de fréquence suivant l'une des revendications précédentes, **caractérisé en ce qu'**une diode (80) de décharge de l'autre condensateur (72) de commutation est montée en parallèle au commutateur (76).

6. Convertisseur (26) de fréquence suivant l'une des revendications précédentes, dans lequel, dans le commutateur (76), une diode (82), montée en série avec le commutateur (76), bloque par le commutateur (76) une décharge de l'autre condensateur (72) de commutation.

7. Convertisseur (26) de fréquence suivant l'une des revendications précédentes, **caractérisé en ce que** la borne (70) du côté du condensateur de la bobine de self (58) est reliée par une diode (84) à l'autre condensateur (72) de commutation, la diode (84) laissant passer le courant de la borne (70) du côté du condensateur à l'autre condensateur (72) de commutation.

8. Convertisseur (26) de fréquence suivant l'une des revendications précédentes, **caractérisé en ce qu'**au moins une résistance de décharge est montée en parallèle à l'autre condensateur (72) de commutation.

9. Procédé pour faire fonctionner un convertisseur (26) de fréquence suivant l'une des revendications précédentes, comprenant les stades :
- de couplage de l'unité (28) d'alimentation au réseau (12) ;
- dans une phase de pré-charge, de charge du condensateur (48) du circuit intermédiaire en énergie électrique provenant du réseau (12) et de commande ainsi d'une intensité d'un courant de charge passant dans le condensateur (48) du circuit intermédiaire, en produisant un signal de commande sur une entrée (G) de commande du commutateur (42) à semi-conducteur, une modification dans le temps de l'intensité du courant étant limitée par la bobine de self (58) et, à l'ouverture du commutateur (42) à semi-conducteur, le courant de charge passant par la diode (60) de roue libre au lieu de passer par le commutateur (42) à semi-conducteur,
- pendant la phase de fonctionnement, d'interruption par le commutateur (42) à semi-conducteur d'un courant de court-circuit provenant du réseau en cas de panne.

10. Procédé suivant la revendication 9, dans lequel le signal de commande est produit par un dispositif (44) de commande en fonction d'une grandeur de mesure, qui dépend d'un état de fonctionnement du convertisseur (26) de fréquence, notamment en fonction d'une tension chutant aux bornes du condensateur (48) du circuit intermédiaire, le dispositif (44) de commande régulant l'intensité du courant, notamment au moyen d'un procédé de régulation à deux positions.

11. Procédé suivant la revendication 9 ou 10, dans lequel, dans la phase de pré-charge, pour la commande de l'intensité du courant, on transmet à l'entrée (G) de commande, comme signal de commande, un signal cadencé, notamment à impulsions modulées en largeur.

12. Procédé suivant l'une des revendications 9 à 11 pour faire fonctionner un convertisseur de fréquence suivant l'une des revendications 4 à 10, dans lequel, dans la phase de pré-charge, pour charger le condensateur (48) du circuit intermédiaire, on fait passer de l'énergie électrique dans des cycles successifs du condensateur (52) de commutation au condensateur (48) de circuit intermédiaire et à cet effet on charge dans chaque cycle, alors que le commutateur (42) à semi-conducteur est bloqué, le condensateur (52) de commutation en énergie électrique provenant du réseau (12) et ensuite, alors que le commutateur (42) à semi-conducteur est passant, on charge le condensateur (48) du circuit intermédiaire en énergie à partir du condensateur (52) de commutation.

13. Procédé suivant l'une des revendications 9 à 12 pour faire fonctionner un convertisseur de fréquence suivant l'une des revendications 4 à 8, dans lequel on ouvre le commutateur (42) à semi-conducteur pour interrompre une phase de fonctionnement, afin d'interrompre un flux de courant allant de l'unité (28) d'alimentation au condensateur (48) du circuit intermédiaire et au convertisseur (32), puis on détermine une tension chutant aux bornes du condensateur (52) de commutation ou aux bornes du commutateur (42) à semi-conducteur et on referme le commutateur (42) à semi-conducteur si la tension déterminée est en valeur absolue plus grande qu'une valeur de seuil déterminée à l'avance.
